Europäisches Patentamt

(19) European Patent Office

Office européen des brevets

(11) Publication number: **0 255 183**
**A1**

(12) **EUROPEAN PATENT APPLICATION**

(21) Application number: 87201444.4

(22) Date of filing: 28.07.87

(51) Int. Cl.4: **A01B 49/04** , A01B 59/06

(30) Priority: 29.07.86 NL 8601943

(43) Date of publication of application:
**03.02.88 Bulletin 88/05**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **Van der Lely, Ary**
**10A, Weverskade**
**Maasland(NL)**
Inventor: **Bom, Cornelis Johannes Gerardus**
**16, Laan van Nieuw Rozenburg**
**Rozenburg(NL)**

(74) Representative: **Mulder, Herman et al**
**Octrooibureau Van der Lely N.V. Weverskade**
**10 P.O. Box 26**
**NL-3155 ZG Maasland(NL)**

(54) **A soil cultivating machine.**

(57) The invention relates to a soil cultivating machine comprising a frame provided with a trestle (16) for coupling to the lifting hitch of a tractor and a plurality of power-driven soil working members (3) arranged in a row extending transversely to the direction of operative travel. Coupling means (17) is arranged at the rear side of the machine for coupling an implement to be combined with the machine, which coupling means (17) include a trestle (25) whose downwardly directed legs (26) are connected pivotally at the lower side to pivotally arranged arms (18). The pivotal connection includes a support for the downwardly directed legs (26) of the trestle (25), which support has two spaced-apart, adjacent supporting points. The trestle (25) is located in the region of the rear side of a frame portion (1), which supports the soil working members (3) and extends transversely to the direction of operative travel A of the machine.

FIG. 2

FIG. 3

1a.

# A SOIL CULTIVATING MACHINE

The invention concerns a soil cultivating machine comprising a frame provided with a trestle for coupling to the lifting hitch of a tractor and a plurality of power-driven soil working members arranged in a row extending transversely to the direction of operative travel, coupling means being arranged at the rear side of the machine for coupling an implement to be combined with the machine, which coupling means includes a trestle whose downwardly directed legs are connected pivotally at the lower side to pivotally arranged arms.

With the aid of the said coupling means it is possible to obtain a combination of the prior art machines of the above-defined type with e.g. a seed drill or a planter. In this connection it has been found that the support of the trestle at its bottom end, said support being effected by means of a ball joint, does not provide a sufficient stabilisation for the seed drill or planter during operation, so that additional provisions are needed to realise the required stability, e.g. the provision of chains.

By using the construction according to the invention an additional provision to improve the stability is no longer necessary, as the pivotal connection includes a support for the downwardly directed legs of the trestle, which support has two spaced-apart, adjacent supporting points.

It has been found that this provision renders it possible, during operation, to significantly increase the stability of the support for the implement to be combined.

A further feature of the invention concerns a construction in which, as seen in plan view, the trestle forming part of the coupling means is located in the region of the rear side of a frame portion supporting the soil working members. In this manner the implement to be combined with the machine can be positioned as closely as possible thereto, thus enabling the whole to be arranged as closely as possible to the rear of the tractor, as a result of which, in particular during transportation, unwanted loading of the lifting hitch of the tractor is prevented.

For a better understanding of the present invention and to show how the same may be carried into effect, reference will now be made, by way of example, to the accompanying drawings, in which:

Figure 1 is a plan view of a soil cultivating machine provided with coupling means according to the invention;

Figure 2 is, to an enlarged scale, a view taken on the line II-II in Figure 1, and

Figure 3 is a view taken in the direction of the arrow III in Figure 2.

The implement shown in the drawings concerns a soil cultivating machine, in particular one for the preparation of a seed bed.

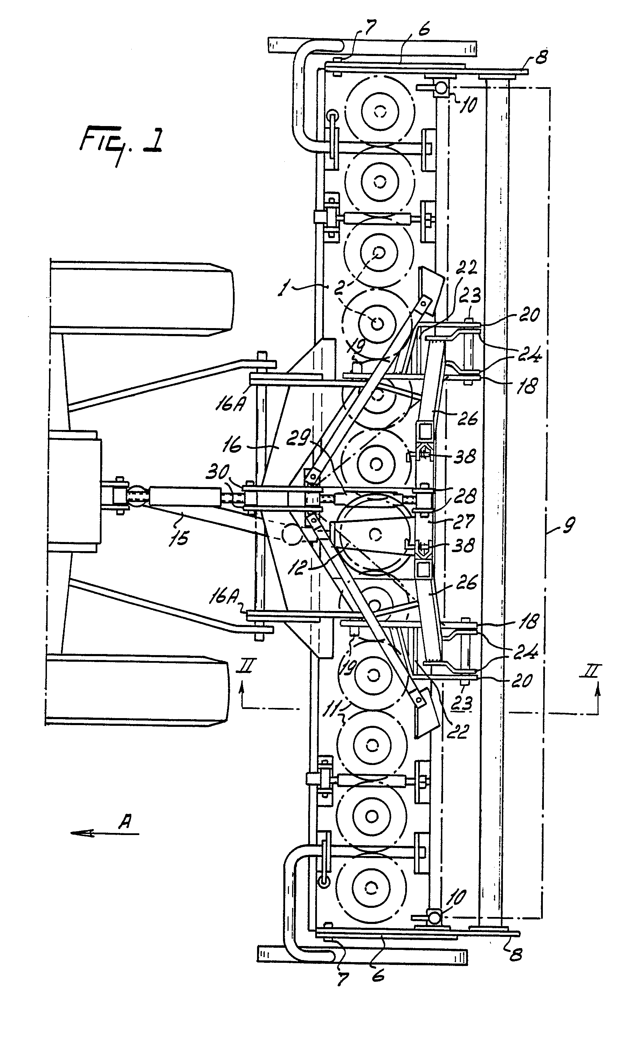

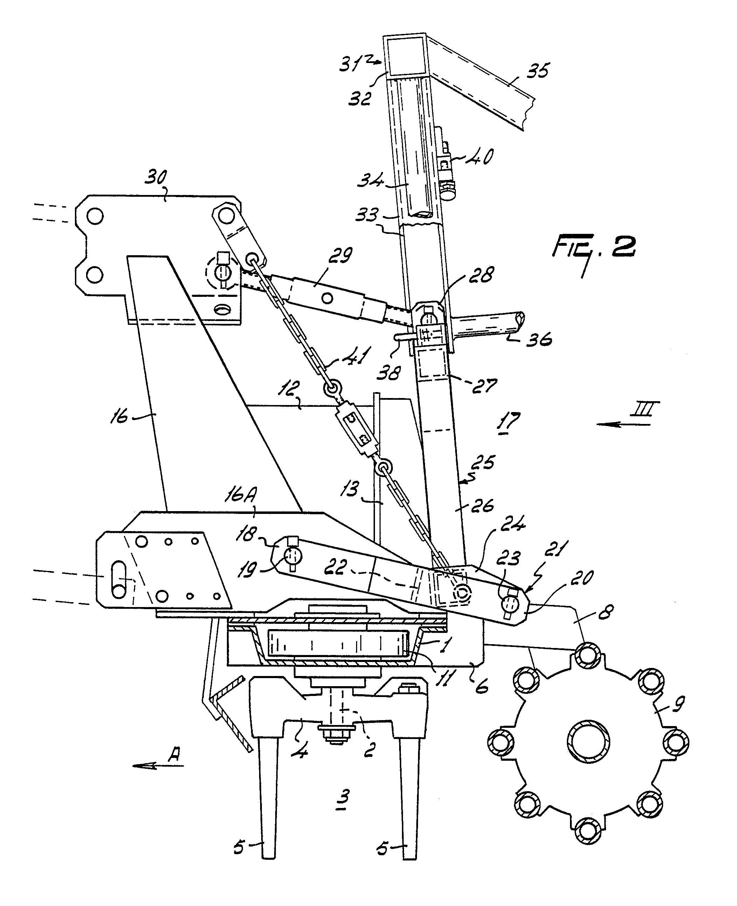

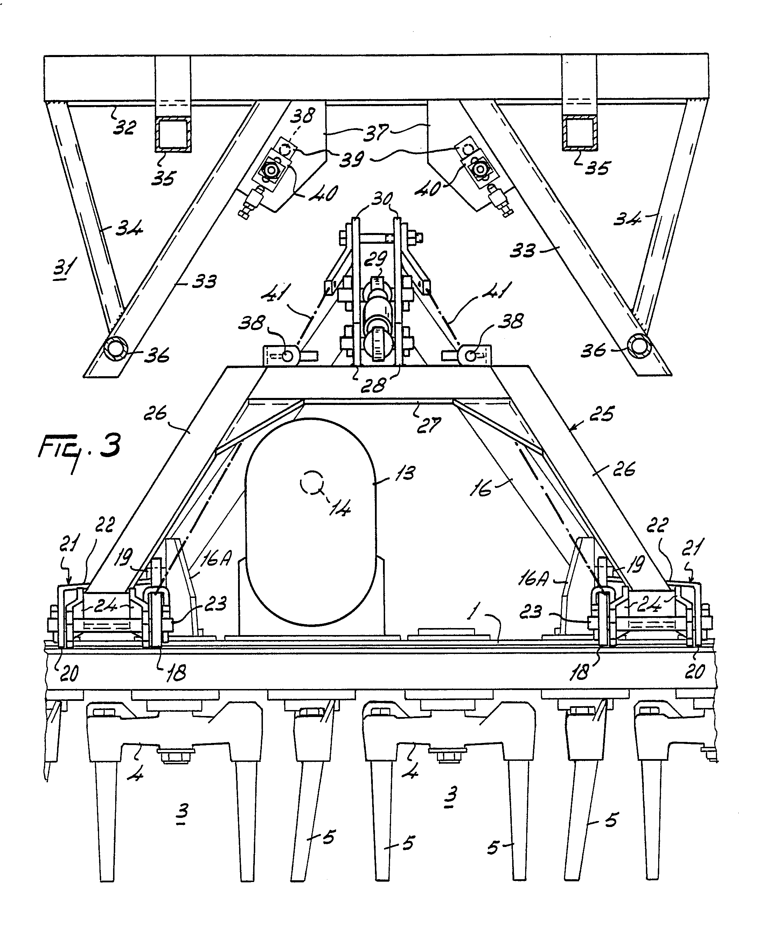

The machine comprises a box-like frame portion 1 which extends transversely to the direction of operative travel A and in which are supported, spaced apart equidistantly by preferably 25 cms, the upwardly, preferably vertically, extending shafts 2 of soil working members 3. Each of the soil working members 3 includes a carrier 4 which extends at least substantially horizontally and is mounted on the end of a shaft 2 that projects from the bottom of the frame portion 1. At its ends, each carrier 4 is provided with soil working elements 5 which extend downwardly and are afforded by tines. The ends of the box-like frame portion 1 are closed by means of plates 6 which extend at least substantially parallel to the direction of operative travel A. Each of the plates 6 has at its front side a bolt 7 which extends transversely to the direction of operative travel A and about which is pivotal an arm 8 extending rearwardly along the inner side of the plates. Between the free ends of the arms 8 there is arranged freely rotatably a roller 9. Each of the arms 8 can be adjusted in height by means of an adjusting device, in this case formed by a threaded spindle 10, and be locked in a plurality of positions, the arrangement being such that the working depth of the soil working members 3 can be set by means of the roller. Inside the box-like frame portion 1, each shaft 2 of a soil working member 3 is provided with a pinion 11, the arrangement being such that the pinions on the shafts of adjacent soil working members are in driving connection with each other. The shaft 2 of a soil working member 3 located near the centre of the box-like frame portion is extended upwardly and by means of this extension reaches to into a gear box 12, inside which the extension is in driving connection via a speed variator 13 with a shaft 14 which extends in the direction of operative travel A, projects at the front side from said gear box, and can be coupled to the power take-off shaft of a tractor via an intermediate shaft 15. Near its centre, the front side of the box-like frame portion 1 includes a trestle 16 which has a three-point connection for coupling to the three-point lifting hitch of a tractor. By means of plates 16A extending at least substantially parallel to the direction of operative travel A, the trestle 16 is disposed on the upper side of the box-like frame portion 1 and at its rear side is provided with coupling means 17 for coupling an implement, such as a seed drill or a planter, to be combined with the machine. The coupling means 17 comprise two arms 18 which are connected pivotally near the front side of the frame portion 1 to the middle of the plates 16A by means of a shaft 19 extending transversely to the direction of operative travel A. From the shaft 19, each of the arms 18 extends rearwardly along the outer side of a plate 16A. Each of the arms 18 is provided in the region of the rear side of the frame portion 1 with a hook 20 which, together with the arm, constitutes a bracket 21 whose legs, seen in plan view, at least reach to the front side of the roller. Between the hook 20 and a point located before the connection of the hook to the arm 18 there is arranged a support 22. Between the ends of the legs of each bracket 21 there is arranged a shaft 23, the arrangement being such that the shafts 23 in the respective brackets 21 are in alignment (Figure 1). Around the shafts 23 there are arranged pivotally strips 24 bearing against the inner side of the legs of a bracket 21. The pairs of strips 24, which like the legs of the bracket 21 are located at least substantially horizontally during operation, constitute a coupling member connected to the lower side of a leg of a bracket-shaped trestle 25. The respective legs 26 of the trestle 25 converge upwardly and at the upper side are interconnected by means of a connecting member 27 extending at least substantially in the horizontal direction (Figure 3). Near its centre, the connecting member 27 is provided at its front side with spaced-apart lugs 28, between which there is arranged one end of a length-adjustable rod 29, whose other end is disposed between plates 30 at the upper side of the trestle 16. The trestle 25 is designed as coupling part of an automatic coupling, whose other coupling part 31 is connected to the implement to be coupled to the machine, which part is shown in further detail in Figures 2 and 3. The coupling part 31 includes a carrier 32 which extends transversely to the direction of operative travel A and is located in an at least substantially horizontal position. The carrier 32 has downwardly diverging portions 33 which are U-shaped and are capable of accommodating the obliquely upwardly directed legs 26 of the trestle 25. The portions 33 are connected to the ends of the carrier 32 by means of supports 34. In order to couple the implement to be combined with the machine, the trestle 25 forming part of the coupling means 17 can be positioned under the coupling part 31 connected to the implement by means of frame portions 35 and 36, whereafter the trestle can be moved upwardly. Then the portions 33 slide over the upwardly extending legs 26 of the trestle 25 and the connecting member 27 of the trestle 25 comes to bear on the lower side of the carrier 32, it then being located partly between plates 37 provided at the bottom side of the carrier 32 and at the inner side of the portions 33. Thereafter there can be inserted spring-loaded pins 38, which are arranged at the upper side of the connecting member 27 and are operable from a tractor in a manner not shown in further detail, in apertures 39 provided in the plates 37, which apertures have an angular structure (Figure 3). The size of the apertures 39 can be readjusted by means of adjustable, lockable portions 40, so that a reliable connection of the coupling part 31 to the trestle 25 can be obtained.

During operation, the machine is connected to the three-point lifting hitch by means of the trestle 16 and is moved in a direction indicated by the arrow A. In this situation, the soil working members 3 are rotated from the tractor via the intermediate shaft 15 and the above-described transmission, whereby adjacent soil working members 3 rotate in opposite directions and cultivate at least adjoining strips of soil by means of their soil working elements 5. With the aid of the coupling means 17 arranged at the rear of the trestle 16 the implement combined with the machine by means of the coupling part 31 at the trestle 25 can move in height independently of the machine via the pivotal connection of the arms 18, the rod 29 and the trestle 25. The downward movement of the trestle 25 is limited by means of lengthadjustable chains 41 arranged between the arms 18 and the plates 30 of the trestle 16, which is of importance in particular during transportation. As is aparent from Figures 1 and 2, the trestle 25 is positioned above the rear side of the frame portion 1 and is pivotal at the lower side about the shafts 23 which, relative to the direction of operative travel A, are located behind the trestle. In this manner it is achieved that the trestle 25, which forms part of the coupling means 17 and like the arms 18 and the rod 29 is provided detachably, is located as closely as possible to the trestle 16 of the machine, so that the combination of machine and added implement, e.g. a seed drill, can be positioned as closely as possible behind the tractor. The pivotal connec tion behind the arms 18 and the trestle 25 comprises two adjacently interspaced supporting points constituted by the strips 24 (Figure 3). The spacing between said supporting points is preferably at least 10 cms. The use of this specific pivotal connection between the rearwardly extending arms 18 and the lower side of the trestle 25 extending at least substantially parallel to a vertical plane transversely to the direction of operative travel achieves that, during operation, the implement combined with the machine has a support of a very high stability, whereby the accuracy of the cultivating operation to be performed by the implement, e.g. sowing, is increased significantly.

## Claims

1. A soil cultivating machine comprising a frame (1) provided with a trestle (16) for coupling to the lifting hitch of a tractor and a plurality of power-driven soil working members (3) arranged in a row extending transversely to the direction of operative travel A, coupling means (17) being arranged at the rear side of the machine for coupling an implement to be combined with the machine, which coupling means (17) includes a trestle (25) whose downwardly directed legs (26) are connected pivotally at the lower side to pivotally arranged arms (18), characterized in that the pivotal connection includes a support for the downwardly directed legs (26) of the trestle (25), which support has two spaced-apart, adjacent supporting points.

2. A soil cultivating machine as claimed in claim 1, characterized in that the trestle (25) is located in the region of the rear side of a frame portion (1) supporting the soil working members (3) and extending transversely to the direction of operative travel A of the machine.

3. A soil cultivating machine as claimed in claim 1 or 2, characterized in that a pivotal connection between a downwardly directed leg (26) of the trestle (25) and a pivotal arm (18) is located behind the trestle (25) with respect to the direction of operative travel A of the machine.

4. A soil cultivating machine as claimed in any one of the preceding claims, characterized in that the trestle (25) forming part of the coupling means (17) extends at least substantially parallel to a vertical plane extending transversely to the direction of operative travel A of the machine.

5. A soil cultivating machine as claimed in any one of the preceding claims, characterized in that a pivotal connection between a downwardly directed leg (26) of the trestle (25) and a pivotal arm (18) includes a bracket (21) which forms part of a pivotal arm (18), and spaced-apart strips (24) which are arranged pivotally between the legs of the bracket (21), said strips (24) being connected to the lower side of a leg (26) of the trestle (25).

6. A soil cultivating machine as claimed in claim 5, characterized in that the strips (24) are arranged at the inner side of the legs of the bracket (21).

7. A soil cultivating machine as claimed in claim 5 or 6, characterized in that the legs of the bracket (21) and the strips (24) are in an at least substantially horizontal position.

8. A soil cultivating machine as claimed in any one of the preceding claims 5 to 7, characterized in that the pivotal connection includes a shaft (23) which extends transversely to the direction of operative travel A of the machine and on which the strips (24) are arranged in spaced-apart relationship.

9. A soil cultivating machine as claimed in claim 8, characterized in that the spacing between the strips (24) is preferably at least 10 cms.

10. A soil cultivating machine as claimed in any one of the preceding claims, characterized in that the upper side of the trestle (25) forming part of the coupling means (17) is pivotally connected by means of a rod (29) to the trestle (16) for coupling the machine to the three-point lifting hitch of a tractor.

11. A soil cultivating machine as claimed in any one of the preceding claims, characterized in that the trestle (25) is designed as part of a remotely operable coupling, whereby the trestle (25) cooperates with a coupling part (31) on the implement to be combined.

FIG. 1

0 255 183

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 102 086 (BERCATO)<br>* Page 3, lines 19-21; figures 6,8 * | 1,4,11 | A 01 B 49/04<br>A 01 B 59/06 |

-----

TECHNICAL FIELDS
SEARCHED (Int. Cl.4)

A 01 B

The present search report has been drawn up for all claims

| Place of search | Date of completion of the search | Examiner |
|---|---|---|
| THE HAGUE | 01-10-1987 | VERDOODT S.J.M. |